# FASCICULE DE BREVET EUROPEEN

(11) **EP 2 702 015 B1**
(45) Date de publication et mention de la délivrance du brevet: **10.06.2020**
(21) Numéro de dépôt: 12724678.3
(22) Date de dépôt: 23.04.2012
(51) Int. Cl.: C03C 3/089, C03C 3/091, H05B 6/12

(54) **DISPOSITIF DE CUISSON PAR INDUCTION**
INDUKTIONSKOCHGERÄT
INDUCTION COOKING DEVICE

(30) Priorité: 29.04.2011 FR 1153670
(43) Date de publication de la demande: 05.03.2014
(73) Titulaire: Eurokera S.N.C., 02407 Château Thierry (FR)
(72) Inventeur: LAURENT, Mathilde, 75013 Paris (FR); GY, René, 93140 Bondy (FR); PELLETIER, Stéphanie, 75014 Paris (FR); FERRIZ, Gaëlle, 51100 Reims (FR); LECOMTE, Emmanuel, 02400 Nesles La Montagne (FR)
(74) Mandataire: Saint-Gobain Recherche
(86) Numéro de dépôt international: PCT/FR2012/050880
(87) Numéro de publication internationale: WO 2012/146860

(56) Documents cités:
- EP-A1- 1 314 704
- WO-A1-98/40320
- GB-A- 2 079 119
- US-A- 5 958 812

## Description

L'invention se rapporte au domaine des dispositifs de cuisson par induction.

Les dispositifs de cuisson par induction comprennent au moins un inducteur disposé sous une plaque en vitrocéramique. Ces dispositifs sont encastrés dans un plan de travail ou dans le bâti d'une cuisinière. La plaque sert de support aux ustensiles de cuisson (casseroles, poêles...), lesquels sont chauffés grâce au courant électrique induit en leur sein par le champ magnétique généré par les inducteurs. Les vitrocéramiques d'aluminosilicate de lithium sont employées à cet effet grâce à leur résistance au choc thermique, conséquence de leur coefficient de dilatation thermique nul ou quasi-nul. Les vitrocéramiques sont produites en soumettant à un traitement thermique à haute température des plaques de verre d'aluminosilicate de lithium, traitement qui génère au sein de la plaque des cristaux de structure beta-quartz ou beta-spodumène dont le coefficient de dilatation thermique est négatif.

Il a été proposé en 1980, par la demande de brevet GB 2 079 119, d'utiliser en lieu et place de la vitrocéramique des plaques de verre épaisses (de 5 ou 6 mm d'épaisseur) éventuellement trempées. Ces plaques n'ont toutefois jamais été commercialisées, car leur résistance thermomécanique s'est révélée insuffisante pour une utilisation pratique et quotidienne, si bien que les dispositifs de cuisson par induction sont, 30 ans après, toujours à base de vitrocéramique.

Les inventeurs ont pu mettre en évidence que certaines plaques de verre pouvaient se prêter à une utilisation concrète dans des dispositifs de cuisson par induction, en satisfaisant les tests les plus sévères.

L'invention a pour objet un dispositif de cuisson par induction comprenant au moins un inducteur disposé sous une plaque en verre renforcé thermiquement dont la composition est du type borosilicate ou du type alumino-boro-silicate et le verre présente les caractéristiques suivantes :
- son épaisseur est d'au plus 4,5 mm,
- le rapport c/a du verre avant renforcement est d'au plus 3,0 après indentation Vickers sous une charge de 1kg, c étant la longueur des fissures radiales et a étant la demi-diagonale de l'empreinte Vickers,
- le rapport σ/(e.E.α) est d'au moins 20 K.mm⁻¹, voire 25 ou 30 K.mm⁻¹, σ étant la contrainte maximale générée au cœur du verre par le renforcement thermique en Pa, e étant l'épaisseur du verre en mm, E étant le module de Young en Pa et α étant le coefficient de dilatation thermique linéaire du verre en K⁻¹.

Le renforcement thermique est aussi appelé trempe ou durcissement. Il consiste à réchauffer le verre au-delà de sa température de transition vitreuse, puis à le refroidir brutalement, généralement au moyen de buses envoyant de l'air sur la surface du verre. Comme la surface se refroidit plus vite que le cœur du verre, des contraintes en compression se forment à la surface de la plaque de verre, équilibrées par des contraintes en tension au cœur de la plaque.

Les performances liées à ces propriétés sont telles qu'il est possible de les utiliser pour former des plaques minces et/ou de grande dimensions latérales, plaques qui sont les plus susceptibles de casser. L'épaisseur de la plaque est de préférence d'au plus 4,5 mm, notamment 4 mm et même 3,5 mm. L'épaisseur est généralement d'au moins 2 mm. La plaque en verre présente de préférence une dimension latérale d'au moins 0,5 m, voire 0,6 m. La dimension la plus grande est généralement d'au plus 1,50 m. Le nombre d'inducteurs est de préférence d'au moins 2, notamment 3 ou 4. C'est en effet pour ce type de dispositifs que le choix du verre devient tout particulièrement crucial.

Le verre utilisé dans le dispositif selon l'invention présente de préférence au moins une des 6 propriétés suivantes, selon toutes les combinaisons possibles :
1. le produit E.α du module de Young (en Pa) et du coefficient de dilatation thermique linéaire du verre (en K⁻¹) est compris entre 0,1 et 0,8 MPa.K⁻¹, notamment entre 0,2 et 0,5 MPa.K⁻¹, en particulier entre 0,2 et 0,4 MPa.K⁻¹. Un produit E.α trop faible rend la trempe thermique plus difficile, tandis qu'un produit E.α trop élevé diminue la résistance au choc thermique.
2. la température inférieure de recuit du verre est d'au moins 500°C, notamment 600°C et même 630°C. Cette température est de préférence d'au plus 800°C, notamment 700°C. Fréquemment appelée « Strain point » dans la technique, elle correspond à la température à laquelle la viscosité du verre est de 10^{14,5} Poises (1 Poise = 0,1 Pa.s). Des températures inférieures de recuit élevées permettent d'éviter toute détrempe du verre pendant le fonctionnement du dispositif de cuisson.
3. le coefficient de dilatation thermique linéaire du verre est d'au plus 50.10⁻⁷/K, notamment est compris entre 30 et 45.10⁻⁷/K, voire entre 32 (ou 35) et 45.10⁻⁷/K. Les coefficients de dilatation thermique élevés ne permettent pas d'obtenir une résistance au choc thermique suffisante. En revanche, un coefficient de dilatation thermique trop faible rend difficile l'obtention d'un renforcement suffisant.
4. le rapport c/a du verre avant renforcement est d'au plus 2,8, notamment 2,7, ou 2,5, et même 0,5, voire 0,2, ou encore 0,1. Ce rapport est même de préférence nul. De manière surprenante, cette propriété, pourtant mesurée avant renforcement, s'est révélée avoir un impact de première importance sur la résistance des plaques durant le fonctionnement effectif des dispositifs de cuisson selon l'invention.
5. le rapport σ/(e.E.α) du verre est d'au moins 20, notamment 30 K.mm⁻¹. Le rapport σ/(e.E.α) est normalement d'au plus 200 K.mm⁻¹, voire 100 K.mm⁻¹. Cette propriété s'est révélée avoir un impact important pour éliminer le risque de casse de la plaque pendant le fonctionnement du dispositif de cuisson.
6. la contrainte maximale générée au cœur du verre par le renforcement thermique est de préférence d'au moins 20 MPa, notamment 25 ou 30 MPa, et même 40 MPa.

Afin d'optimiser sa résistance thermomécanique, le verre utilisé selon un mode de réalisation de l'invention présente de préférence toutes ces caractéristiques préférées en combinaison. D'autres combinaisons sont possibles, notamment les combinaisons des propriétés 1+2, 1+3, 1+4, 1+5, 1+6, 2+3, 2+4, 2+5, 2+6, 3+4, 3+5, 3+6, 4+5, 4+6, 5+6, 1+2+3, 1+2+4, 1+2+5, 1+2+6, 1+3+4, 1+3+5, 1+3+6, 1+4+5, 1+4+6, 1+5+6, 1+2+3+4, 1+2+3+5, 1+2+3+6, 1+3+4+5, 1+3+4+6, 1+3+5+6, 1+4+5+6, 1+2+3+4+5, 1+2+3+4+6, 1+2+3+5+6, 1+2+4+5+6, 1+3+4+5+6.

En particulier, le verre utilisé est de préférence trempé thermiquement et présente préférentiellement les caractéristiques suivantes : son épaisseur est d'au plus 4,5 mm, le rapport c/a est d'au plus 2,5, et le rapport σ/(e.E.α) est d'au moins 20 K.mm⁻¹, voire 30 K.mm⁻¹.

Le coefficient de dilatation thermique linéaire est mesuré selon la norme ISO 7991 :1987 entre 20 et 300°C et exprimé en K⁻¹. La température inférieure de recuit est mesurée selon la norme ISO 7884-7 :1987.

Le module de Young (ou module d'élasticité) E est mesuré par flexion quatre points sur une éprouvette de verre de 100^{∗}10^{∗}4 mm³. Les deux appuis inférieurs sont situés à une distance de 90 mm l'un de l'autre, tandis que les deux appuis supérieurs sont situés à une distance de 30 mm l'un de l'autre. Les appuis supérieurs sont centrés par rapport aux appuis inférieurs. La force est appliquée au milieu de l'éprouvette, par au-dessus. La déformation est mesurée à l'aide d'une jauge de contrainte, et le module de Young est calculé comme étant le rapport entre la contrainte et la déformation. L'incertitude de mesure est généralement de l'ordre de 3% en relatif. Le module de Young est exprimé en Pa.

Le rapport c/a est mesuré comme détaillé ci-après. Un indenteur Vickers de type TestWell FM7 est chargé à P=1000 g à température ambiante, pendant 30 s, la vitesse de descente étant égale à 50 µm/s. Les mesures de a (demi-diagonale de l'empreinte Vickers) et c (longueur des fissures radiales, partant des coins de l'empreinte, dans la direction de la diagonale) sont effectuées à l'aide d'un microscope optique 1 h après l'expérience. Le résultat est la moyenne arithmétique issue d'un ensemble de 10 mesures.

La contrainte à cœur σ (contrainte maximale en tension générée au cœur du verre par le renforcement thermique) est mesurée par photoélasticimétrie à l'aide d'un polariscope, par exemple le polariscope commercialisé par la société GlasStress Ltd sous la dénomination SCALP-04. A partir d'une plaque, on mesure généralement la contrainte au niveau du centre de la plaque (2 mesures), et au niveau des 4 coins, à au moins 10 cm des bords. Le résultat est une moyenne de ces 6 mesures, exprimé en Pa.

Selon un mode de réalisation préféré, la composition du verre est du type borosilicate.

Dans ce cas la composition chimique du verre comprend de préférence de la silice SiO₂ en une teneur pondérale allant de 70 à 85%, de l'oxyde de bore B₂O₃ en une teneur pondérale allant de 8% à 20% et au moins un oxyde alcalin, la teneur pondérale totale en oxydes alcalins allant de 1 à 10%.

La composition chimique du verre borosilicate comprend de préférence (ou consiste essentiellement en) les constituants suivants, variant dans les limites pondérales ci-après définies :

| | |
|---|---|
| SiO₂ | 70 - 85 %, notamment 75 - 85 % |
| B₂O₃ | 8 - 16%, notamment 10 - 15 % ou 9 - 12% |
| Al₂O₃ | 0 - 5 %, notamment 0 - 3% ou 2 - 5% |
| K₂O | 0 - 2 %, notamment 0 - 1 % |
| Na₂O | 1 - 8 %, notamment 2 - 6 %. |

De préférence, la composition peut en outre comprendre au moins un des oxydes suivants : MgO, CaO, SrO, BaO, ZnO, en une teneur pondérale totale allant de 0 à 10%, notamment CaO en une teneur pondérale allant de 1 à 2%.

Selon un autre mode de réalisation préféré, la composition du verre est du type alumino-boro-silicate, notamment dépourvu d'oxydes alcalins.

Dans ce cas la composition chimique du verre comprend de préférence de la silice SiO₂ en une teneur pondérale allant de 45% à 68%, de l'alumine Al₂O₃ en une teneur pondérale allant de 8 à 20%, de l'oxyde de bore B₂O₃ en une teneur pondérale allant de 4% à 18%, des oxydes alcalino-terreux choisis parmi MgO, CaO, SrO et BaO, en une teneur totale allant de 5 à 30%, la teneur pondérale totale en oxydes alcalins ne dépassant pas 10%, notamment 1%, voire 0,5%. Par « dépourvu d'oxydes alcalins », on entend que la teneur totale pondérale en oxydes alcalins est d'au plus 1%, notamment 0,5%, et même 0,1%.

La composition chimique du verre alumino-boro-silicate comprend de préférence (ou consiste essentiellement en) les constituants suivants, variant dans les limites pondérales ci-après définies :

| | |
|---|---|
| SiO₂ | 45 - 68 %, notamment 55 - 65 % |
| Al₂O₃ | 8 - 20 %, notamment 14 - 18 % |
| B₂O₃ | 4 - 18 %, notamment 5 - 10 % |
| RO | 5 - 30 %, notamment 5 - 17 % |
| R₂O | au plus 10 %, notamment 1 %. |

Comme il est d'usage dans la technique, l'expression « RO » désigne les oxydes alcalino-terreux MgO, CaO, SrO et BaO, tandis que l'expression « R₂O » désigne les oxydes alcalins. De telles composition permettent d'obtenir des rapports c/a très faibles, notamment d'au plus 1, voire 0, 6.

L'expression « consiste essentiellement en » doit être comprise en ce sens que les oxydes précités constituent au moins 96%, voire 98% du poids du verre. La composition comprend usuellement des additifs servant à l'affinage du verre ou à la coloration du verre. Les agents d'affinage sont typiquement choisis parmi les oxydes d'arsenic, d'antimoine, d'étain, de cérium, les halogènes, les sulfures métalliques, notamment le sulfure de zinc. La teneur pondérale en agents d'affinage est normalement d'au plus 1%, de préférence entre 0,1 et 0,6%. Les agents de coloration sont l'oxyde de fer, présent comme impureté dans la plupart des matières premières, l'oxyde de cobalt, de chrome, de cuivre, de vanadium, de nickel, le sélénium. La teneur pondérale totale en agents de coloration est normalement d'au plus 2%, voire 1%. L'introduction d'un ou de plusieurs de ces agents peut conduire à obtenir une plaque de verre sombre, de très faible transmission lumineuse (typiquement d'au plus 3%, notamment 2% et même 1%), qui présentera l'avantage de dissimuler les inducteurs, le câblage électrique, ainsi que les circuits de commande et de contrôle du dispositif de cuisson. Une autre alternative, décrite plus loin dans le texte, consiste à munir une partie de la surface de la plaque d'un revêtement opaque ou substantiellement opaque, ou à disposer un matériau opaque, de préférence de couleur sombre, entre la plaque et les éléments internes du dispositif.

Les plaques peuvent être fabriquées de manière connue par fusion de matières premières pulvérulentes puis formage du verre obtenu. La fusion est typiquement réalisée dans des fours réfractaires à l'aide de brûleurs utilisant comme comburant de l'air ou, mieux, de l'oxygène, et comme combustible du gaz naturel ou du fioul. Des résistances en molybdène ou en platine immergées dans le verre en fusion peuvent également apporter toute ou partie de l'énergie utilisée pour obtenir un verre fondu. Des matières premières (silice, borax, colémanite, alumine hydratée, calcaire, dolomie etc.) sont introduites dans le four et subissent sous l'effet des hautes températures diverses réactions chimiques, telles que des réactions de décarbonatation, de fusion proprement dite... La température maximale atteinte par le verre est typiquement d'au moins 1500°C, notamment comprise entre 1600 et 1700°C. Le formage du verre en plaques peut se faire de manière connue par laminage du verre entre des rouleaux métalliques ou céramiques, ou encore par flottage, technique consistant à déverser le verre fondu sur un bain d'étain en fusion.

Comme indiqué *supra,* il est préférable que la plaque de verre soit apte à dissimuler les inducteurs, le câblage électrique, ainsi que les circuits de commande et de contrôle du dispositif de cuisson. De préférence, seuls les dispositifs d'affichage sont visibles par l'utilisateur. Notamment lorsque la transmission de la plaque de verre en tant que telle est trop élevée (typiquement au-delà de 3%), il est possible de munir une partie de la surface de la plaque (celle qui dans le dispositif de cuisson est située au regard des éléments à dissimuler) d'un revêtement déposé sur et/ou sous la plaque, ledit revêtement ayant la capacité d'absorber et/ou de réfléchir et/ou de diffuser le rayonnement lumineux. Le revêtement peut être déposé sous la plaque, c'est-à-dire sur la surface en regard des éléments internes du dispositif, aussi appelée « face inférieure », et/ou sur la plaque, c'est-à-dire en face supérieure.

Le revêtement peut être continu ou discontinu, par exemple présenter des motifs, ou une trame à maillage ou à piquetage ou moucheture. Il peut notamment s'agir d'un émail tramé disposé en face supérieure de la plaque. Dans certains cas, le revêtement peut être continu dans certaines zones, et discontinu dans d'autres zones. Ainsi, il est possible de disposer un revêtement discontinu au niveau des éléments chauffants et un revêtement continu ailleurs, tout en réservant une zone non revêtue au regard des dispositifs émettant de la lumière. La transmission lumineuse de la plaque munie de son revêtement, dans les zones revêtues, est de préférence d'au plus 0,5% et même 0,2%. Le revêtement peut être totalement opaque.

La zone en regard des dispositifs émettant de la lumière peut également être dotée d'un revêtement, à la condition que ce revêtement ne soit pas opaque.

Avantageusement, la plaque comporte également un décor en face supérieure, généralement en émail, dont la fonction est décorative, et non destiné à masquer les éléments internes du dispositif de cuisson. Le décor permet généralement d'identifier les zones de chauffe (par exemple en les représentant sous forme de cercle), les zones de commande (notamment les touches sensitives), d'apporter des informations, de représenter un logo. Ce décor est à différencier du revêtement décrit précédemment et plus précisément dans ce qui suit, qui constitue un réel moyen de masquage.

De manière préférée, le revêtement peut être une couche à base organique, telle qu'une couche de peinture ou de laque, ou une couche à base minérale, telle qu'un émail ou une couche métallique ou d'un oxyde, nitrure, oxynitrure, oxycarbure d'un métal. De préférence, les couches organiques seront déposées en face inférieure, tandis que les couches minérales, notamment les émaux, seront déposées en face supérieure.

La peinture pouvant être utilisée est avantageusement choisie de façon à résister à de hautes températures et à présenter une stabilité, dans le temps au niveau de sa couleur et de sa cohésion avec la plaque, et de façon à ne pas affecter les propriétés mécaniques de la plaque.

La peinture utilisée présente avantageusement une température de dégradation supérieure à 300°C, en particulier comprise entre 350°C et 700°C. Elle est généralement à base de résine(s), le cas échéant chargée (par exemple en pigment (s) ou colorant(s)), et éventuellement diluée pour ajuster sa viscosité en vue de son application sur la plaque, le diluant ou le solvant (par exemple du white spirit, du toluène, des solvants de type hydrocarbures aromatiques, comme le solvant commercialisé sous la marque Solvesso 100® par la société Exxon, etc.) étant le cas échéant éliminé lors de la cuisson ultérieure de la peinture.

Par exemple, la peinture peut être une peinture à base d'au moins une résine silicone, en particulier une résine silicone modifiée par l'incorporation d'au moins un radical tel qu'un radical alkyde ou phényle ou méthyle, etc. On peut également ajouter des pigments comme colorants, tels que des pigments pour émaux (choisis par exemple parmi les composants contenant des oxydes métalliques, tels que des oxydes de chrome, des oxydes de cuivre, des oxydes de fer, des oxydes de cobalt, des oxydes de nickel, ou parmi les chromates de cuivre, les chromates de cobalt, etc.), TiO₂, etc. On peut également utiliser comme pigments des particules d'un ou de métaux tels que l'aluminium, le cuivre, le fer, etc, ou des alliages à base d'au moins un de ces métaux. Les pigments peuvent aussi être « à effet » (pigments à effet métallique, pigments interférentiels, pigments nacrés, etc.), avantageusement sous forme de paillettes d'oxyde d'aluminium (Al₂O₃) revêtues par des oxydes métalliques ; on peut citer par exemple les pigments commercialisés par la Société MERCK sous la marque « Xirallic® », tels que des pigments ou pigments interférentiels TiO₂/Al₂O₃ (Xirallic® T-50-10SW Crystal Silver ou Xirallic® T-60-23SW Galaxy Blue ou Xirallic® T-60-24SW Stellar Green), ou des pigments Fe₂O₃/Al₂O₃ (Xirallic® T-60-50SW Fireside Copper ou Xirallic® F-60-51 Radiant Red). D'autres pigments à effet pouvant être utilisés sont par exemple les pigments nacrés à base de particules de mica revêtues par des oxydes ou combinaison d'oxydes (choisis par exemple parmi TiO₂, Fe₂O₃, Cr₂O₃, etc), tels que ceux commercialisés sous la marque IRIODIN® par la Société Merck, ou à base de plaquettes de silice revêtues par des oxydes ou combinaison d'oxydes (comme ceux ci-dessus), tels que ceux commercialisés sous la marque Colorstream® par la Société Merck. Des charges ou autres pigments de coloration classiques peuvent également être incorporés aux pigments à effet précités.

De façon particulièrement préférée, la peinture utilisée comprend au moins (ou est à base de) un (co)polymère résistant à haute température (en particulier présentant une température de dégradation supérieure à 400°C), cette peinture pouvant ou non renfermer au moins une charge minérale pour assurer sa cohésion ou son renforcement mécanique et/ou sa coloration. Ce (co)polymère ou résine peut notamment être une ou plusieurs des résines suivantes : résine polyimide, polyamide, polyfluorée, polysilsesquioxane et/ou polysiloxane.

Les résines polysiloxanes sont particulièrement préférées : elles sont incolores, et donc susceptibles d'être colorées (par exemple avec des charges ou pigments leur conférant la couleur souhaitée) ; elles peuvent être utilisées en l'état réticulable (généralement de par la présence de groupements SiOH et/ou SiOMe dans leur formule, ces groupements intervenant le plus souvent jusqu'à 1 à 6% en masse de leur masse totale), ou transformées (réticulées ou pyrolysées). Elles présentent avantageusement dans leur formule, des motifs phényle, éthyle, propyle et/ou vinyle, très avantageusement des motifs phényle et/ou méthyle. Elles sont de préférence choisies parmi les polydiméthylsiloxanes, les polydiphénylsiloxanes, les polymères de phénylméthylsiloxane et les copolymères de diméthylsiloxane-diphénylsiloxane.

Les résines polysiloxanes réticulables utilisées préférentiellement présentent généralement une masse moléculaire moyenne en poids (Mw) comprise entre 2000 et 300 000 Daltons.

De façon non limitative on peut indiquer que des résines Dow Corning® 804, 805, 806, 808, 840, 249, 409 HS et 418 HS, Rhodorsil® 6405 et 6406 de Rhodia, Triplus® de General Electric Silicone et SILRES® 604 de Wacker Chemie GmbH, utilisées seules ou en mélange conviennent parfaitement.

Les résines ainsi choisies sont notamment aptes à résister au chauffage par induction.

La peinture peut être exempte de charges minérales, notamment si son épaisseur reste faible. Toutefois, de telles charges minérales sont généralement utilisées, par exemple pour renforcer mécaniquement la couche de peinture déposée, contribuer à la cohésion de ladite couche, à son accrochage à la plaque, pour lutter contre l'apparition et la propagation de fissures en son sein, etc. A de telles fins, au moins une fraction desdites charges minérales présente préférentiellement une structure lamellaire. Les charges peuvent aussi intervenir pour la coloration. Le cas échéant, plusieurs types de charges complémentaires peuvent intervenir (par exemple des charges non colorées pour le renforcement mécanique et d'autres charges telles que des pigments pour la coloration). La quantité efficace de charges minérales correspond généralement à un taux volumique de 10 à 60%, plus particulièrement de 15 à 30% (taux volumiques basés sur le volume total des charges et de la peinture).

L'épaisseur de chaque couche de peinture déposée peut être comprise entre 1 et 100 microns, notamment entre 5 et 50 microns. L'application de la peinture ou résine peut s'effectuer par toute technique adaptée, telle que le dépôt à la brosse, à la raclette, par pulvérisation, dépôt électrostatique, trempage, dépôt au rideau, dépôt par sérigraphie, jet d'encre etc. et se fait de préférence par sérigraphie (ou éventuellement dépôt à la raclette). La technique de sérigraphie est particulièrement avantageuse en ce qu'elle permet aisément de réserver certaines zones de la plaque, notamment les zones qui seront en regard des dispositifs émettant de la lumière, voire les zones situées en regard des moyens de chauffage par rayonnement. Lorsque d'autres techniques sont employées, les réserves peuvent être obtenues en disposant des masques adéquats sur les zones que l'on ne souhaite pas recouvrir.

Le dépôt peut être suivi par un traitement thermique destiné à assurer selon les cas le séchage, la réticulation, la pyrolyse, etc. de la ou des couches déposées.

De préférence, on choisit au moins une couche de peinture dans laquelle la résine a été, au moins en partie, réticulée et/ou pyrolysée, partiellement ou en totalité, et/ou n'a pas été traitée thermiquement (la résine peut éventuellement être destinée à être éliminée des endroits où elle n'a pas été traitée thermiquement), ladite couche de peinture consistant, en partie ou en totalité, en un mélange a) de charges minérales et b) d'au moins une résine polysiloxane réticulable (quasi) exempte de précurseur(s) de matériau(x) carboné(s) et/ou d'au moins une résine polysiloxane réticulée (quasi) exempte de matériau(x) carboné(s) et de précurseur(s) de matériau(x) carboné(s) et/ou d'une matrice minérale poreuse à base de silice (la résine ayant par exemple été pyrolysée et se trouvant donc minéralisée), (quasi) exempte de matériau(x) carboné(s), les charges minérales étant distribuées dans la résine ou la matrice.

La couche de peinture est de préférence recouverte d'une couche de protection, par exemple en résine silicone modifiée par des radicaux alkyles ou résine polysiloxane.

Comme indiqué précédemment, le revêtement peut également être un émail. L'émail est formé à partir d'une poudre comprenant une fritte de verre et des pigments (ces pigments pouvant également faire partie de la fritte), et d'un médium pour l'application sur le substrat.

La fritte de verre est de préférence obtenue à partir d'un mélange vitrifiable comprenant généralement des oxydes choisis notamment parmi les oxydes de silicium, de zinc, de sodium, de bore, de lithium, de potassium, de calcium, d'aluminium, de magnésium, de baryum, de strontium, d'antimoine, de titane, de zirconium, de bismuth. Des frittes de verre particulièrement adaptées sont décrites dans les demandes FR 2782318 ou WO2009/092974.

Les pigments peuvent être choisis parmi les composés contenant des oxydes métalliques tels que des oxydes de chrome, de cuivre, de fer, de cobalt, de nickel, etc, ou peuvent être choisis parmi les chromates de cuivre ou de cobalt, etc, le taux de pigment (s) dans l'ensemble fritte(s)/pigment(s) étant par exemple compris entre 30 et 60 % en poids.

Les pigments peuvent aussi être « à effet » (pigments à effet métallique, pigments interférentiels, pigments nacrés, etc.), tels que ceux cités précédemment en relation avec une peinture. Le taux de pigments à effet peut être par exemple de l'ordre de 30 à 60% en poids par rapport à la base (fritte de verre) dans laquelle ils sont incorporés.

La couche peut être notamment déposée par sérigraphie (la base et les pigments étant le cas échéant mis en suspension dans un médium approprié généralement destiné à se consumer dans une étape de cuisson ultérieure, ce médium pouvant notamment comporter des solvants, des diluants, des huiles, des résines, etc), l'épaisseur de la couche étant par exemple de l'ordre de 1 à 6 µm.

La technique de sérigraphie est particulièrement avantageuse en ce qu'elle permet aisément de réserver certaines zones de la plaque, notamment les zones qui seront en regard des dispositifs émettant de la lumière.

La ou chaque couche d'émail utilisée pour former le revêtement est de préférence une couche simple, isolée d'autre(s) couche(s) d'émail éventuelle(s), et d'épaisseur n'excédant généralement pas 6 µm, de préférence n'excédant 3 µm. La couche d'émail est en général déposée par sérigraphie.

Le revêtement peut encore être une couche métallique ou d'un oxyde, nitrure, oxynitrure, oxycarbure d'un métal. Par « couche » on doit également comprendre les empilements de couches. Cette couche peut être absorbante et/ou réfléchissante.

Cette couche peut donc être par exemple au moins une couche simple métallique ou essentiellement métallique (par exemple une couche mince d'Ag, W, Ta, Mo, Ti, Al, Cr, Ni, Zn, Fe, ou d'un alliage à base de plusieurs de ces métaux, ou une couche mince à base d'aciers inoxydables, etc.), ou peut être un empilement de (sous) couches comprenant une ou plusieurs couches métalliques, par exemple une couche métallique (ou essentiellement métallique) avantageusement protégée (revêtue sur au moins une face et de préférence sur ses deux faces opposées) par au moins une couche à base de matériau diélectrique (par exemple au moins une couche en argent ou en aluminium revêtue d'au moins une couche de protection en Si₃N₄ - en particulier un empilement Si₃N₄/métal/Si₃N₄ - ou en SiO₂).

Il peut alternativement s'agir d'un revêtement monocouche à base de matériau diélectrique à fort indice de réfraction n, c'est-à-dire supérieur à 1,8, de préférence supérieur à 1,95, de façon particulièrement préférée supérieur à 2, par exemple une monocouche de TiO₂, ou de Si₃N₄, ou de SnO₂, etc.

Dans un autre mode de réalisation avantageux, la couche peut être formée d'un empilement de (sous) couches minces à base de matériau(x) diélectrique(s) alternativement à forts (de préférence supérieur à 1,8, voire 1,95, voire 2, comme explicité précédemment) et faibles (de préférence inférieur à 1,65) indices de réfraction, notamment de matériau(x) de type oxyde métallique (ou nitrure ou oxynitrure de métaux), tel que TiO₂, SiO₂ ou oxyde mixte (étain-zinc, zinc-titane, silicium-titane, etc.) ou alliage, etc., la (sous) couche déposée le cas échéant en premier et se trouvant donc contre la face intérieure de la plaque étant avantageusement une couche de fort indice de réfraction.

Comme matériau de (sous) couche à fort indice de réfraction, on peut citer par exemple TiO₂ ou éventuellement SnO₂, Si₃N₄, SnₓZn_{y}O_{z}, TiOₓ ou SiₓTi_{y}O_{z}, ZnO, ZrO₂, Nb₂O₅ etc. Comme matériau de (sous) couche à faible indice de réfraction, on peut citer par exemple SiO₂, ou éventuellement un oxynitrure et/ou un oxycarbure de silicium, ou un oxyde mixte de silicium et d'aluminium, ou un composé fluoré par exemple de type MgF₂ ou AlF₃, etc.

L'empilement peut comprendre par exemple au moins trois (sous) couches, la couche la plus proche du substrat étant une couche de fort indice de réfraction, la couche intermédiaire étant une couche à faible indice de réfraction, et la couche extérieure étant une couche à fort indice de réfraction (par exemple un empilement comprenant l'alternance de couches d'oxydes suivante : (substrat)-TiO₂/SiO₂/TiO₂).

L'épaisseur (géométrique) de chaque couche à base de couche(s) mince(s) déposée est généralement comprise entre 15 et 1000 nm, en particulier 20 et 1000 nm (l'épaisseur du substrat étant généralement de quelques millimètres, le plus souvent autour de 4 mm), l'épaisseur de chacune des (sous) couches (dans le cas d'un empilement) pouvant varier entre 5 et 160 nm, généralement entre 20 et 150 nm (par exemple dans le cas de l'empilement TiO₂/SiO₂/TiO₂, elle peut être de l'ordre de quelques dizaines de nanomètres, par exemple de l'ordre de 60-80 nm, pour les couches de TiO₂ et de l'ordre de 60 -80 ou 130-150 nm pour la couche de SiO₂ selon l'aspect, par exemple plutôt argenté ou plutôt doré, que l'on souhaite obtenir).

La couche à base de couche (s) mince (s) peut être appliquée sur la plaque en ligne ou en reprise (par exemple après découpe et/ou façonnage de ladite plaque). Elle peut être appliquée notamment par pyrolyse (poudre, liquide, gazeuse), par évaporation, ou par pulvérisation. De préférence, elle est déposée par pulvérisation et/ou par une méthode de dépôt sous vide et/ou assistée par plasma ; on utilise en particulier le mode de dépôt de couche(s) par pulvérisation cathodique (par exemple par pulvérisation cathodique magnétron), notamment assistée par champ magnétique (et en courant continu ou alternatif), les oxydes ou nitrures étant déposés à partir de cible(s) de métal ou d'alliage ou de silicium ou céramique (s), etc. appropriées, si nécessaire dans des conditions oxydantes ou nitrurantes (mélanges le cas échéant d'argon/oxygène ou d'argon/azote). On peut déposer par exemple les couches d'oxyde par pulvérisation réactive du métal en question en présence d'oxygène et les couches de nitrures en présence d'azote. Pour faire du SiO₂ ou du Si₃N₄ on peut partir d'une cible en silicium que l'on dope légèrement avec un métal comme l'aluminium pour la rendre suffisamment conductrice. La ou les (sous) couches choisies selon l'invention se condensent sur le substrat de façon particulièrement homogène, sans qu'il ne se produise de séparation ou délaminage.

Outre la plaque en verre et au moins un inducteur (de préférence trois voire quatre et même cinq), le dispositif de cuisson peut comprendre au moins un dispositif émettant de la lumière, au moins un dispositif de commande et de contrôle, l'ensemble étant compris dans un caisson.

Un, le ou chaque dispositif émettant de la lumière est avantageusement choisi parmi les diodes électroluminescentes (par exemple faisant partie d'afficheurs à 7 segments), les afficheurs à cristaux liquides (LCD), à diodes électroluminescentes, éventuellement organiques (OLED), les afficheurs fluorescents (VFD). Les couleurs vues au travers de la plaque sont diverses : rouge, vert, bleu, et toutes les combinaisons possibles, dont le jaune, le violet, le blanc... Ces dispositifs émettant de la lumière peuvent être purement décoratifs, par exemple séparer visuellement différentes zones de la plaque. Le plus souvent toutefois ils auront un rôle fonctionnel en affichant diverses informations utiles pour l'utilisateur, notamment indication de la puissance de chauffe, de la température, de programmes de cuisson, de temps de cuisson, de zones de la plaque dépassant une température prédéterminée.

Les dispositifs de commande et de contrôle comprennent généralement des touches sensitives, par exemple du type capacitif ou à infrarouge.

L'ensemble des éléments internes est généralement fixé à un caisson, souvent métallique, qui constitue donc la partie inférieure du dispositif de cuisson, normalement dissimulé dans le plan de travail ou dans le corps de la cuisinière.

Les exemples qui suivent illustrent l'invention sans toutefois la limiter.

Une feuille de verre borosilicate appelée B1, de 3,8 mm d'épaisseur et présentant la composition pondérale ci-après définie est produite de manière connue par fusion et formage par flottage. Des plaques de 590^{∗}590 mm² sont découpées à partir de cette feuille de verre.

| | |
|---|---|
| SiO₂ | 80,5 % |
| Al₂O₃ | 2,5 % |
| B₂O₃ | 13,0 % |
| Na₂O | 3,4 % |
| K₂O | 0,6 % |

Le rapport c/a est de 1,7.

La feuille de verre est ensuite trempée thermiquement, par chauffage à 730°C et refroidissement à l'air, de manière à ce que la contrainte maximale à cœur soit de 30 MPa.

Les propriétés de la feuille de verre sont les suivantes :
Module de Young (E) : 60 GPa.
Coefficient de dilatation linéaire (α) : 34.10⁻⁷/K.
E.α : 0,20 MPa/K.
Température inférieure de recuit : 500°C.
σ/(e.E.α) : 39 K/mm.

Une feuille de verre borosilicate appelée B2, de 4,0 mm d'épaisseur et présentant la composition pondérale ci-après définie est produite de manière connue par fusion et formage par flottage. Des plaques de 590^{∗}590 mm² sont découpées à partir de cette feuille de verre.

| | |
|---|---|
| SiO₂ | 80,6 % |
| Al₂O₃ | 2,2 % |
| B₂O₃ | 12,9 % |
| Na₂O | 4,1 % |
| K₂O | 0,2 % |

Le rapport c/a est de 1,9.

La feuille de verre est ensuite trempée thermiquement, par chauffage à 730°C et refroidissement à l'air, de manière à ce que la contrainte maximale à cœur soit de 20 MPa.

Les propriétés de la feuille de verre sont les suivantes :
Module de Young (E) : 61 GPa.
Coefficient de dilatation linéaire (α) : 35.10⁻⁷/K.
E.α : 0,21 MPa/K.
Température inférieure de recuit : 509°C.
σ/(e.E.α) : 23 K/mm.

Ces plaques B1 et B2 sont comparées à deux plaques comparatives de même taille, l'une étant une plaque de verre appelée C, de composition silico-sodo-calcique, l'autre une plaque de verre appelée B3, de composition borosilicate.

Le verre C présente la composition pondérale suivante :

| | |
|---|---|
| SiO₂ | 69 % |
| Al₂O₃ | 0,5 % |
| CaO | 10,0 % |
| Na₂O | 4,5 % |
| K₂O | 5,5 % |
| SrO | 7,0 % |
| ZrO₂ | 3,5 %. |

Ses propriétés sont les suivantes.

L'épaisseur est de 4 mm.

Le rapport c/a est de 3,4.

La feuille de verre est trempée thermiquement de manière à ce que la contrainte maximale à cœur soit de 70 MPa.
Module de Young (E) : 76 GPa.
Coefficient de dilatation linéaire (α) : 76.10⁻⁷/K.
E.α : 0,58 MPa/K.
Température inférieure de recuit : 582°C.
σ/(e.E.α):30 K/mm.

Le verre de borosilicate B3 présente la composition pondérale suivante :

| | |
|---|---|
| SiO₂ | 79 % |
| Al₂O₃ | 2,5 % |
| B₂O₃ | 14,2 % |
| Fe₂O₃ | 0,012 % |
| Na₂O | 3,6 % |
| K₂O | 0,6 %. |

Ses propriétés sont les suivantes.

L'épaisseur du verre est de 3,8 mm.

Le rapport c/a est de 1,7.

La feuille de verre est renforcée thermiquement de manière à ce que la contrainte maximale à cœur soit de 4 MPa.

Module de Young (E) : 64 GPa.
Coefficient de dilatation linéaire (α) : 32.10⁻⁷/K.
E.α : 0,20 MPa/K.
Température inférieure de recuit : 518°C.
σ/(e.E.α) : 5 K/mm.

Le tableau 1 ci-après récapitule les différentes propriétés des verres testés.

**Tableau 1**

| | B1 | B2 | B3 | C |
|---|---|---|---|---|
| Epaisseur (mm) | 3,8 | 4,0 | 3,8 | 4,0 |
| c/a | 1,7 | 1,9 | 1,7 | 3,4 |
| E (GPa) | 60 | 61 | 64 | 76 |
| α (10⁻⁷/K) | 34 | 35 | 32 | 76 |
| E.α (MPa.K⁻¹) | 0,20 | 0,21 | 0,20 | 0,58 |
| σ/ (e.E.α) (K.mm⁻¹) | 39 | 23 | 5 | 30 |

Les tests d'utilisation de la plaque sont décrits ci-après.

Chaque plaque de verre subit un cycle d'essai comprenant successivement les étapes suivantes :
- 2 passages de sable, avec une charge de 3,9 g/cm²,
- un test dit de « casserole vide », puis, si la plaque n'a pas cassé,
- 5 passages d'un tampon à récurer commercialisé sous la dénomination Scotch Brite Vert, sous une charge de 1kg/cm²,
- un test dit de « casserole vide », puis, si la plaque n'a pas cassé,
- 10 passages d'une casserole de 4,5 kg à triple fond inox,
- un test dit de « casserole vide ».

Le test dit de « casserole vide » est effectué comme suit. Le centre de la plaque est positionné sur le foyer d'une table à induction muni d'un inducteur de référence E.G.O. A2, sans bridage des bords de la plaque. Deux cents millilitres d'eau sont portés à ébullition à puissance maximale, dans une casserole Lagostina Pandora de 20 cm de diamètre. Une fois la totalité de l'eau évaporée, la table n'est éteinte qu'après 10 à 15 minutes de casserole vide. La température maximale atteinte par la plaque en face inférieure atteint 390°C.

La plaque est jugée satisfaisante si aucune casse n'est observée après ce cycle d'essais.

Aucune des 10 plaques de verre borosilicate B1 ou B2 testées ne casse après ce cycle d'essais.

Pour ce qui est de la plaque de verre borosilicate B3 en revanche, les 10 plaques testées ont cassé. Pour le verre silico-sodo-calcique C, 5 plaques sur les 10 testées ont cassé.

Les plaques de verre B1 et B2 se révèlent donc des substituts intéressants aux vitrocéramiques d'aluminosilicate de lithium dans des dispositifs de cuisson par induction.

D'autres plaques de verre A1 et A2 utilisables dans un dispositif selon l'invention sont détaillées dans le tableau 2 ci-après.

**Tableau 2**

| | A1 | A2 |
|---|---|---|
| SiO₂ | 50 | 59 |
| Al₂O₃ | 10 | 17 |
| B₂O₃ | 15 | 7 |
| MgO | - | 0,8 |
| CaO | - | 4 |
| SrO | - | 1,8 |
| BaO | 25 | 10 |
| R₂O | - | - |
| épaisseur (mm) | 4,0 | 4,0 |
| c/a | 2,0 | 0,5 |
| E (GPa) | 69 | 71 |
| α (10⁻⁷/K) | 47 | 38 |
| E.α (MPa.K⁻¹) | 0,32 | 0,27 |
| σ/(e.E.α) (K.mm⁻¹) | 43 | 50 |
| T inférieure de recuit (°C) | 593 | 666 |

## Revendications

1. Dispositif de cuisson par induction comprenant au moins un inducteur disposé sous une plaque en verre renforcé thermiquement dont la composition est du type borosilicate ou du type alumino-boro-silicate, **caractérisé en ce que** le verre présente les caractéristiques suivantes :
- son épaisseur est d'au plus 4,5 mm,
- le rapport c/a du verre avant renforcement est d'au plus 3,0 après indentation Vickers sous une charge de 1kg, c étant la longueur des fissures radiales et a étant la demi-diagonale de l'empreinte Vickers,
- le rapport σ/(e.E.α) est d'au moins 20 K.mm⁻¹, voire 30 K.mm⁻¹, σ étant la contrainte maximale en tension générée au cœur du verre par le renforcement thermique en Pa, e étant l'épaisseur du verre en mm, E étant le module de Young en Pa et α étant le coefficient de dilatation thermique linéaire du verre en K⁻¹.

2. Dispositif selon l'une des revendications précédentes, tel que l'épaisseur de la plaque est d'au plus 4 mm.

3. Dispositif selon l'une des revendications précédentes, tel que la plaque en verre présente une dimension latérale d'au moins 0,5 m.

4. Dispositif selon l'une des revendications précédentes, tel que le produit E.α du module de Young et du coefficient de dilatation thermique linéaire du verre est compris entre 0,1 et 0,8 MPa.K⁻¹, notamment entre 0,2 et 0,5 MPa.K⁻¹.

5. Dispositif selon l'une des revendications précédentes, tel que la température inférieure de recuit du verre est d'au moins 500°C, notamment 600°C.

6. Dispositif selon l'une des revendications précédentes, tel que le coefficient de dilatation thermique linéaire du verre est d'au plus 50.10⁻⁷/K, notamment est compris entre 30 et 45.10⁻⁷/K.

7. Dispositif selon l'une des revendications précédentes, tel que le rapport c/a du verre avant renforcement est d'au plus 2,8, notamment 2,5.

8. Dispositif selon l'une des revendications précédentes, tel que la contrainte maximale en tension générée au cœur du verre par le renforcement thermique est d'au moins 20 MPa, notamment 25 MPa.

9. Dispositif selon l'une des revendications 1 à 8, tel que la composition chimique du verre borosilicate comprend de la silice SiO₂ en une teneur pondérale allant de 70 à 85%, de l'oxyde de bore B₂O₃ en une teneur pondérale allant de 8% à 20% et au moins un oxyde alcalin, la teneur pondérale totale en oxydes alcalins allant de 1 à 10%.

10. Dispositif selon l'une des revendications 1 à 8, tel que la composition chimique du verre borosilicate comprend les constituants suivants, variant dans les limites pondérales ci-après définies :
| | |
|---|---|
| SiO₂ | 70 - 85 % |
| B₂O₃ | 8 - 16% |
| Al₂O₃ | 0 - 5 % |
| K₂O | 0 - 2 % |
| Na₂O | 1 - 8 %. |

11. Dispositif selon l'une des revendications 1 à 8, tel que la composition du verre est du type alumino-boro-silicate dépourvu d'oxydes alcalins.

12. Dispositif selon l'une des revendications 1 à 8, tel que la composition chimique du verre alumino-boro-silicate comprend les constituants suivants, variant dans les limites pondérales ci-après définies :
| | |
|---|---|
| SiO₂ | 45 - 68 %, notamment 55 - 65 % |
| Al₂O₃ | 8 - 20 %, notamment 14 - 18% |
| B₂O₃ | 4 - 18 %, notamment 5 - 10% |
| RO | 5 - 30 %, notamment 5 - 17 % |
| R₂O | au plus 10%, notamment 1%, |
l'expression « RO » désignant les oxydes alcalino-terreux MgO, CaO, SrO et BaO, et l'expression « R₂O » désignant les oxydes alcalins.

13. Dispositif selon l'une des revendications précédentes, tel qu'une partie de la surface de la plaque est munie d'un revêtement opaque ou substantiellement opaque, ou tel que l'on dispose un matériau opaque, de préférence de couleur sombre, entre la plaque et les éléments internes du dispositif.

## Patentansprüche

1. Induktionskochgerät, umfassend mindestens einen Induktor, der unter einer thermisch verstärkten Glasplatte angeordnet ist, deren Zusammensetzung vom Borosilicat-Typ oder vom Alumino-Borosilicat-Typ ist, **dadurch gekennzeichnet, dass** das Glas die folgenden Eigenschaften aufweist:
- seine Dicke beträgt höchstens 4,5 mm,
- das c/a-Verhältnis des Glases beträgt vor der Verstärkung höchstens 3,0 nach dem Vickers-Eindruck unter einer Last von 1 kg, wobei c die Länge der radialen Risse und a die halbe Diagonale des Vickers-Eindrucks ist,
- das Verhältnis σ/(eEα) beträgt mindestens 20 K.mm⁻¹ oder 30 K.mm⁻¹, wobei σ die maximale Zugspannung ist, die im Kern des Glases durch thermische Verstärkung in Pa erzeugt wird, wobei e die Dicke des Glases in mm ist, wobei E der Elastizitätsmodul in Pa ist, und wobei α der lineare Wärmeausdehnungskoeffizient des Glases in K⁻¹ ist.

2. Gerät nach einem der vorhergehenden Ansprüche, wobei die Dicke der Platte höchstens 4 mm beträgt.

3. Gerät nach einem der vorhergehenden Ansprüche, wobei die Glasplatte eine seitliche Abmessung von mindestens 0,5 m aufweist.

4. Gerät nach einem der vorangehenden Ansprüche, wobei das Produkt E.α des Elastizitätsmoduls und des Koeffizienten der linearen thermischen Ausdehnung des Glases zwischen einschließlich 0,1 und 0,8 MPa.K⁻¹, insbesondere zwischen 0,2 und 0,5 MPa.K⁻¹ beträgt.

5. Gerät nach einem der vorhergehenden Ansprüche, wobei die untere Glühtemperatur des Glases mindestens 500 °C, insbesondere 600 °C beträgt.

6. Gerät nach einem der vorhergehenden Ansprüche, wobei der lineare Wärmeausdehnungskoeffizient des Glases höchstens 50,10⁻⁷/K beträgt, insbesondere zwischen einschließlich 30 und 45,10⁻⁷/K beträgt.

7. Gerät nach einem der vorhergehenden Ansprüche, wobei das c/a-Verhältnis des Glases vor der Verstärkung höchstens 2,8, insbesondere 2,5 beträgt.

8. Gerät nach einem der vorhergehenden Ansprüche, wobei die maximale Zugspannung, die im Kern des Glases durch die Wärmeverstärkung erzeugt wird, mindestens 20 MPa, insbesondere 25 MPa beträgt.

9. Gerät nach einem der Ansprüche 1 bis 8, wobei die chemische Zusammensetzung des Borosilicatglases Silicium SiO₂ mit einem Gewichtsanteil von 70 bis 85 %, Boroxid B₂O₃ mit einem Gewichtsanteil von 8 % bis 20 % und mindestens ein Alkalioxid umfasst, wobei der Gesamtgewichtsanteil an Alkalioxiden von 1 bis 10 % reicht.

10. Gerät nach einem der Ansprüche 1 bis 8, wobei die chemische Zusammensetzung des Borosilicatglases die folgenden Bestandteile umfasst, die innerhalb der nachfolgend festgelegten Gewichtsgrenzen schwanken:
| | |
|---|---|
| SiO₂ | 70 - 85 % |
| B₂O₃ | 8 - 16 % |
| Al₂O₃ | 0 - 5 % |
| K₂O | 0 - 2 % |
| Na₂O | 1 - 8 %. |

11. Gerät nach einem der Ansprüche 1 bis 8, wobei die Zusammensetzung des Glases vom Alumino-Borosilicat-Typ ohne Alkalioxide ist.

12. Gerät nach einem der Ansprüche 1 bis 8, wobei die chemische Zusammensetzung des Alumino-Borosilicat-Glases die folgenden Bestandteile umfasst, die innerhalb der nachfolgend festgelegten Gewichtsgrenzen schwanken:
| | |
|---|---|
| SiO₂ | 45 - 68 %, insbesondere 55 - 65 % |
| Al₂O₃ | 8 - 20 %, insbesondere 14 - 18 % |
| B₂O₃ | 4 - 18 %, insbesondere 5 - 10 % |
| RO | 5 - 30 %, insbesondere 5 - 17 % |
| R₂O | höchstens 10 %, insbesondere 1 %, |
wobei der Ausdruck "RO" die Erdalkalioxide MgO, CaO, SrO und BaO bezeichnet, und wobei der Ausdruck "R₂O" die Alkalioxide bezeichnet.

13. Gerät nach einem der vorhergehenden Ansprüche, wobei ein Teil der Oberfläche der Platte mit einer undurchsichtigen oder im Wesentlichen undurchsichtigen Beschichtung versehen ist, oder wobei ein undurchsichtiges Material, vorzugsweise von dunkler Farbe, zwischen der Platte und den inneren Elementen des Geräts angeordnet ist.

## Claims

1. An induction cooking device comprising at least one inductor positioned under a thermally strengthened glass plate, the composition of which glass is of borosilicate type or alumino-boro-silicate type, **characterized in that** the glass has the following characteristics:
- its thickness is at most 4.5 mm,
- the c/a ratio of the glass before strengthening is at most 3.0 after Vickers indentation under a load of 1 kg, c being the length of the radial cracks and a being the half-diagonal of the Vickers impression,
- the σ/(e.E.α) ratio is at least 20 K.mm⁻¹, or even 30 K.mm⁻¹, σ being the maximum tensile stress generated at the core of the glass by the thermal strengthening in Pa, e being the thickness of the glass in mm, E being the Young's modulus in Pa and α being the linear thermal expansion coefficient of the glass in K⁻¹.

2. The device as claimed in one of the preceding claims, such that the thickness of the plate is at most 4 mm.

3. The device as claimed in either of the preceding claims, such that the glass plate has a lateral dimension of at least 0.5 m.

4. The device as claimed in one of the preceding claims, such that the product E.α of the Young's modulus and of the linear thermal expansion coefficient of the glass is between 0.1 and 0.8 MPa.K⁻¹, in particular between 0.2 and 0.5 MPa.K⁻¹.

5. The device as claimed in one of the preceding claims, such that the lower annealing temperature of the glass is at least 500°C, in particular 600°C.

6. The device as claimed in one of the preceding claims, such that the linear thermal expansion coefficient of the glass is at most 50 × 10⁻⁷ K⁻¹, and in particular is between 30 and 45 × 10⁻⁷ K⁻¹.

7. The device as claimed in one of the preceding claims, such that the c/a ratio of the glass before strengthening is at most 2.8, in particular 2.5.

8. The device as claimed in one of the preceding claims, such that the maximum tensile stress generated at the core of the glass by the thermal strengthening is at least 20 MPa, in particular 25 MPa.

9. The device as claimed in one of claims 1 to 8, such that the chemical composition of the borosilicate glass comprises silica SiO₂ in a weight content ranging from 70% to 85%, boron oxide B₂O₃ in a weight content ranging from 8% to 20% and at least one alkali metal oxide, the total weight content of alkali metal oxides ranging from 1% to 10%.

10. The device as claimed in one of claims 1 to 8, such that the chemical composition of the borosilicate glass comprises the following constituents, varying within the weight limits defined below:
| | |
|---|---|
| SiO₂ | 70%-85%, |
| B₂O₃ | 8%-16%, |
| Al₂O₃ | 0-5%, |
| K₂O | 0-2%, |
| Na₂O | 1%-8%. |

11. The device as claimed in one of claims 1 to 8, such that the composition of the glass is of alumino-borosilicate type free of alkali metal oxides.

12. The device as claimed in one of claims 1 to 8, such that the chemical composition of the alumino-boro-silicate glass comprises the following constituents, varying within the weight limits defined below:
| | |
|---|---|
| SiO₂ | 45%-68%, especially 55%-65%, |
| Al₂O₃ | 8%-20%, especially 14%-18%, |
| B₂O₃ | 4%-18%, especially 5%-10%, |
| RO | 5%-30%, especially 5%-17%, |
| R₂O | at most 10%, especially 1%, |
the expression "RO" denoting the alkaline-earth metal oxides MgO, CaO, SrO and BaO, and the expression "R₂O" denoting the alkali metal oxides.

13. The device as claimed in one of the preceding claims, such that a portion of the surface of the plate is equipped with an opaque or substantially opaque coating, or such that an opaque material, preferably of dark color, is positioned between the plate and the internal elements of the device.
